Europäisches Patentamt

European Patent Office

Office européen des brevets

(11) Publication number: **0 339 544 B1**

# EUROPEAN PATENT SPECIFICATION

(45) Date of publication of patent specification: **22.09.93**  (51) Int. Cl.⁵: **F16F  1/04**

(21) Application number: **89107381.9**

(22) Date of filing: **24.04.89**

(54) **Garter spring with canted back angle located on outside diameter.**

(30) Priority: **25.04.88 US 186016**

(43) Date of publication of application:
**02.11.89 Bulletin  89/44**

(45) Publication of the grant of the patent:
**22.09.93 Bulletin  93/38**

(84) Designated Contracting States:
**AT BE CH DE ES FR GB GR IT LI LU NL SE**

(56) References cited:
**US-A- 3 323 785**
**US-A- 3 468 527**
**US-A- 4 655 462**

(73) Proprietor: **Balsells, Peter J.**
**P.O. Box 15092**
**Santa Ana California 92705(US)**

(72) Inventor: **Balsells, Peter J.**
**P.O. Box 15092**
**Santa Ana California 92705(US)**

(74) Representative: **Witte, Alexander, Dr.-Ing. et al**
**Witte, Weller, Gahlert & Otten Patentanwälte**
**Augustenstrasse 14**
**D-70178 Stuttgart (DE)**

Rank Xerox (UK) Business Services
(3.10/3.6/3.3.1)

**Description**

The invention relates to a garter-type axially resilient coiled spring comprising a plurality of coils canted along a centerline thereof, each coil including a trailing portion and a leading portion with the leading portion advancing along the centerline more than the advancement along the centerline when following the trace of the trailing portion; the disposition of the trailing portion of each coil being defined by its back angle with respect to a line normal to the centerline and normal to the plane made up by the garter-type spring; the disposition of the leading portion of each coil being defined by its front angle with respect to the line normal to the centerline and normal to the plane made up by the garter-type spring; said front angle being greater than said back angle; and said coils being interconnected in a manner forming a garter-type axially resilient coiled spring.

A garter-type axially resilient coiled spring of this kind is known from US-A-3 468 527.

The present invention generally relates to a coil spring and seal and, more particularly, relates to garter-type coiled springs having canted coils which exhibit preselected resilient, or load-deflection characteristics in response to axial loading of the springs.

Springs adapted for axial loading, by themselves or in conjunction with seals, are commonplace in the industry. Any number of pistons, bearings, pumps, clutches, and the like, may require annular, or garter-type, configuration, and many workers have investigated a great number of the design parameters which define the resilient characteristics of the spring. As an example, US-A- 3,323,785 and US-A- 3,468,527 to Mather are representative of garter-type springs specifically tailored for axial loading.

Because of the numerous applications in which garter-type springs may be utilized and the diverse load-deflection characteristics demanded by each of those applications, careful design of each garter-type spring must be made in order to tailor the resilient characteristics thereof to meet the needs of the proposed application. For example, a spring designed for use in a seal, preferably has a working deflection in which the spring provides a substantially even or constant force over a broad range of deflection. With this resilient characteristic, variation in the distance between the sealed members, which may be caused by wear, does not affect the spring applied sealing pressure therebetween. Other applications require that the spring provide a linearly increasing force in response to deflection throughout a specified operating range, while in some cases even a negative load-deflection characteristic may be preferable.

Referring to US-A- 3,468,527, it is noted that Mather carefully studied spring characteristics in an effort to provide improved coiled spring constructions in which a wide variety of highly predictable load-deflection characteristics could be obtained to permit tailoring of the springs to the requirements of a wide variety of installations. Mather found that the ratio of the diameter of the coil to the diameter of the wire is a characteristic which can be varied to provide a range of load-deflection characteristics, while holding the profile angles of the spring constant.

Other investigators in most cases have fabricated garter-type springs by simply forming a conventional coil spring into a ring by welding or clamping the ends together. It should be appreciated that while garter-type, or annular, springs, as a class, have the same general shape, wide performance variations exist depending on the specific design of the spring. According to one classification, the annular spring may be either axial load bearing spring or radial load bearing spring. As the classification implies, axial load bearing springs are designed for accommodating axial loading, while radial load bearing springs are designed for accommodating radial loading. The hereinabove referred to U.S. Patents to Mather are exemplary of axial load bearing springs and US-A- 4,655,462 to Balsells discloses that annular, or garter-type springs, may be designed for radial loading thereof. The differences between the springs is substantial.

As an example, the useful purpose of "radial" type springs is their ability to deflect under radial loading. This is to be contrasted with the axially loaded springs of Mather which provides for a coil spring which is expected to remain radially stable under axial compression.

The present invention represents a substantial improvement in the design of garter-type axially loaded springs which provide for the tailoring of the resilient characteristics of the spring to a degree far beyond that possible heretofore. While the springs of the present invention may appear to be structurally similar to prior art springs and their performance comparable to other springs in many applications, their design characteristics can be controlled in order to enable springs to be used in applications not possible with heretofore annular springs.

For example, Mather in US-A- 3,468,527 primarily relies on a spring index which is the ratio of the diameter of the coil to the diameter of the wire to provide a means for adjusting the resilient characteristics of the spring. And, in US-A-3,323,785, Mather teaches a variation of an angle of slant $\alpha$ which is formed by the intersection of the planes containing the diameters of the individual coils, with a plane normal to the axis of the coil, in order to alter the resilient characteristics of the spring. While these are useful parameters for tailoring the resilient characteristics of the spring, they are limited and do not provide for a spring which must be made of a specific wire diameter and coil size to accommodate predetermined dimensions in which a variation of the angle of slant a does not define a spring having the appropriate resilient characteristics desired.

The spring of the present invention overcomes the hereinabove identified deficiencies and heretofore known annular or garter-type axially loaded springs. With the features stated in the characterizing part of claim 1.

In accordance with the present invention, a garter-type axially resilient coiled spring includes a plurality of coils canted along a centerline thereof. Back angle means are provided not only for defining the disposition of a trailing portion of each coil with respect to a line normal to the centerline, but also for determining the force deflection characteristics, including the working resilient range, of the garter-type axially resilient coiled spring.

Heretofore, no one has recognized the importance of the spring back angle, hereinafter described in greater detail, and its dominant effect on spring performance. That is, by controlling the back angle which defines the trailing portion of each coil, the resilient characteristics can be designed to meet criteria heretofore not possible without the controlled selection and adjustment of the back angle.

Front angle means, hereinafter described in greater detail, are provided for defining the disposition of a leading portion of each coil with respect to the normal line. In each instance, the front angle means is greater than the back angle means.

The coils are interconnected in a manner forming a garter-type axially resilient coil spring with the trailing portion along an outside diameter of the garter-type axially resilient coil spring and the leading portion along an inside diameter of the garter-type axially resilient coil spring. This feature, in combination with the back angle means hereinabove described, provide for the capability of tailoring a garter-type axially resilient coil spring, in accordance with the present invention, to desired resilient characteristics beyond the range of a conventional garter-type axially resilient coil springs.

As an example, the trailing portion angle along the outside diameter of the spring can enable the spring to exert a greater force in response to a given deflection than a spring having the same dimensions and wire size with the trailing portion along the inside diameter of the spring, such as disclosed in US-A- 3,323,785 and US-A- 3,468,527. Consequently, springs of the present invention can be fabricated from smaller wire and have closer coil spacing while still exerting the same force in response to deflection as prior art springs.

This characteristic is important when the springs are needed in combination with a seal. Since the seals are generally made from a soft material, such as an elastomer or plastic, stress concentration is a prime consideration, and the lower the stress concentration, the longer the life that can be effected on the seal. That is, because springs, in accordance with the present invention, can exert more even force, compared to prior art springs, using smaller wire and closer spaced coils, the stress concentration on cooperating seal material is less. This results in more effective sealing and greater seal life.

More particularly, the garter-type axially resilient coil spring according to the present invention, may include a plurality of coils which are canted in a counterclockwise direction. Specifically, the back angle may be greater than one degree and less than 40 degrees, and the front angle may be greater than 15 degrees and less than 55 degrees. The back angle means defines a working deflection in which the garter-type axially resilient coil spring exerts a generally constant force in an axial direction in response to deflection of the garter-type axially resilient coil spring in the axial direction, with the working deflection being between about 5 percent and about 35 or more percent deflection of the spring. The back angle may be less than 40 degrees and selected to enable to the front angle to be less than 35 degrees which is beyond the range of any heretofore produced axially loaded garter-type springs.

In accordance with the present invention, a method for fabricating a garter-type axially resilient coil spring includes the steps of winding a wire to produce coils canted with respect to a centerline of the garter-type axially resilient coil spring, with each coil having a leading portion and a trailing portion. The wire may be wound so that the leading portion is disposed at a front angle to a line normal to the centerline of the garter-type axially resilient coil spring and the trailing portion is disposed at a back angle to the normal line.

During winding of the wire, the magnitude of the back angle can be adjusted in order to achieve preselected load-deflection characteristics of the garter-type axially resilient coil spring. It should be appreciated that while the back angle is specifically controlled, the corresponding front angle may vary depending on the coil spacing, that is the average distance between adjacent coils.

Thereafter, two ends of the wound wire are attached in a manner forming a garter-type axially resilient coil spring with a trailing portion along the outside diameter of the garter-type axially resilient coil spring and the leading portion along the inside diameter of the garter-type axially resilient coil spring.

More specifically, the wire may be wound in a counterclockwise direction and the coils may be canted in a counterclockwise direction with regard to the centerline. During winding of the coil, the back angle is adjusted to determine maximum load and the total deflection load point of the garter-type axially resilient coil spring, and the front angle may be held constant while adjusting the back angle.

The back angle may be made greater than one degree and less than 40 degrees and the front angle may be made greater than 15 degrees and less than 55 degrees. Alternatively, the back angle may be made less than 25 degrees and the front angle made less than 35 degrees.

## BRIEF DESCRIPTION OF THE DRAWINGS

The advantages and features of the present invention will appear from the following description when considered in conjunction with the accompanying drawings in which:

Figure 1 is a theoretical load versus deflection curve illustrating the various parameters of an axially resilient coil spring;

Figures 2a and b are plan and side views, respectively, of a circular welded clockwise wound spring with a back angle defining a trailing portion along the outside diameter of the spring and a front angle defining a leading portion along the inside diameter of the spring, in accordance with the present invention.

Figure 3a and b are plan and side views, respectively, of a circular counter-clockwise wound spring having the same physical dimensions as the spring shown in Figure 2a, 2b, also having a back angle defining a trailing portion along the outside diameter of the spring and a front angle defining a leading portion along an inside diameter of the spring;

Figure 4 is a load versus deflection curve for the springs shown in Figures 2 and 3;

Figure 5 shows load deflection curves for a variety of axially loaded counterclockwise springs with the trailing portion along the outside diameter thereof corresponding to the spring dimensions set forth in Table 1;

Figure 6 shows load deflection curves for axially springs having different back angles;

Figure 7 is a depiction of the winding of a spring about a mandrel showing the spring being wound in a counterclockwise direction; and

Figure 8 is a perspective view showing a wound spring in a position for welding or attaching ends together to form a garter-type spring having a coil trailing portion along the outside diameter of the spring and a coil leading portion along the inside diameter of the spring.

## DETAILED DESCRIPTION

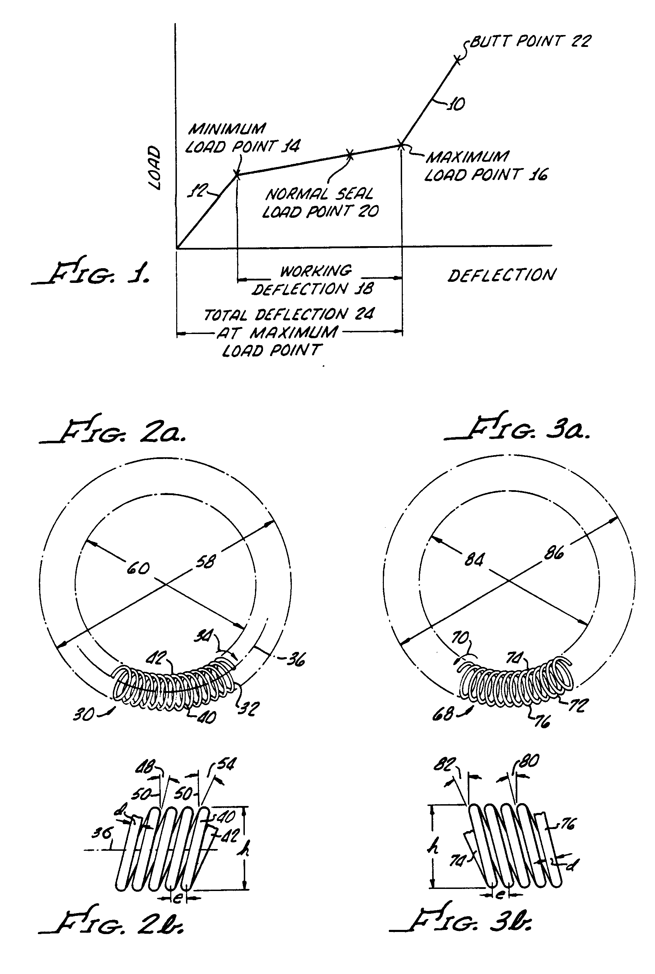

Turning now to Figure 1 there is shown an exemplary load deflection curve 10 for the purpose of illustrating the characteristics of canted coil garter-type axially resilient coiled springs, when the load is axially applied to the spring, the spring deflects in a generally linear fashion as shown by the line segment 12 until it reaches a minimum of load point 14 which represents the point at which, after the initial deflection, the load begins to remain relatively constant.

Between the minimum load point 14 and a maximum load point 16, the load deflection curve may be constant or show a slight increase as shown in Figure 1. The area between the minimum load point 14 and maximum load point 16 is known as the working deflection range 18. The spring is normally loaded for operation within this range, as indicated by point 20, for a typical spring utilized in conjunction with a seal, gasket, or the like, for sealing purposes. Loading of the spring beyond the maximum load point 16 results in an abrupt deflection response until it reaches a butt point 22, which results in a permanent set in the spring as a result of overloading. Also indicated in Figure 1, is the total deflection range 24, which is defined as the deflection between the unloaded spring and the deflection at the maximum load point 16.

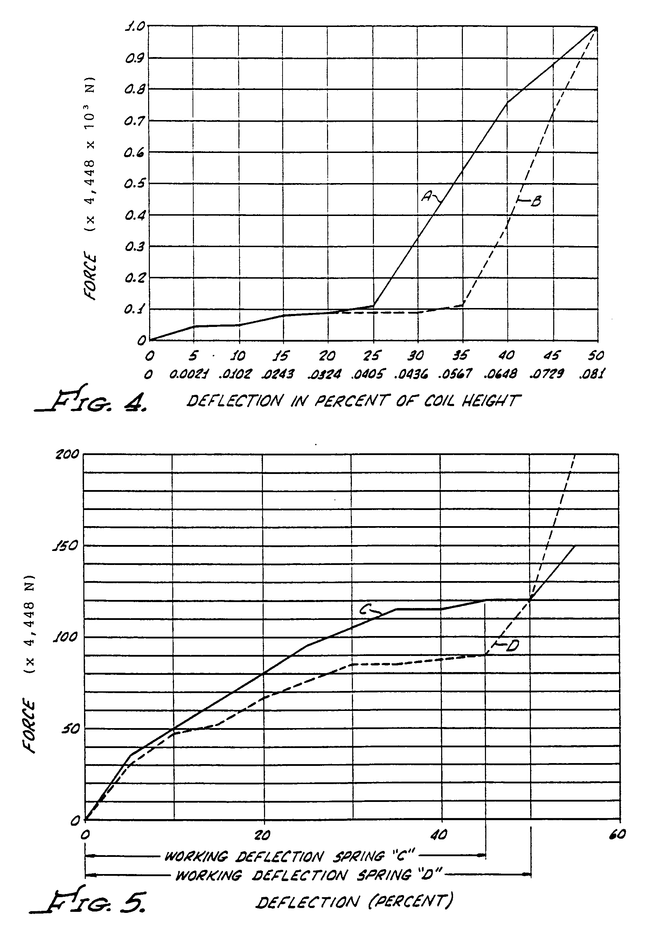

Figures 2a and 2b show a circular welded spring 30, in accordance with the present invention, generally showing a plurality of coils 32 wound in a clockwise fashion (see arrow 34) which are canted in a counterclockwise direction along a centerline 36 thereof.

As more clearly shown in Figure 2b, each coil includes a trailing portion 40 and a leading portion 42, with the trailing portion having a back angle 48 which provides for means for both defining the disposition of the trailing portion 40 of each coil 32 with respect to a normal line 50 and for determining the working resilient range of the spring 30 as hereinafter described in greater detail.

In addition, a front angle 54 provides means for defining the disposition of the leading portion 42 of the coil 32 with respect to the normal line.

The spring 30 is formed by interconnecting the coils 32 in a manner forming a garter-type axially resilient coil spring with the trailing portion 40 along an outside diameter 58 (see Figure 2a) of the spring 30 and the leading portion 42 along an inside diameter 60 of the spring 30.

As can be seen most clearly in Figure 2b, the spring 30, in accordance with the present invention, always has a leading portion 40 disposed at a front angle 54, which is greater than the back angle 48 defining the trailing portion 40. That is, as the coil is traced in the circular-like manner about the centerline 36 each revolution includes a trailing portion and a leading portion, with the leading portion advancing movement along the centerline 36 more than the advancement along the centerline 36 when following the trailing portion 40 of the coil 32.

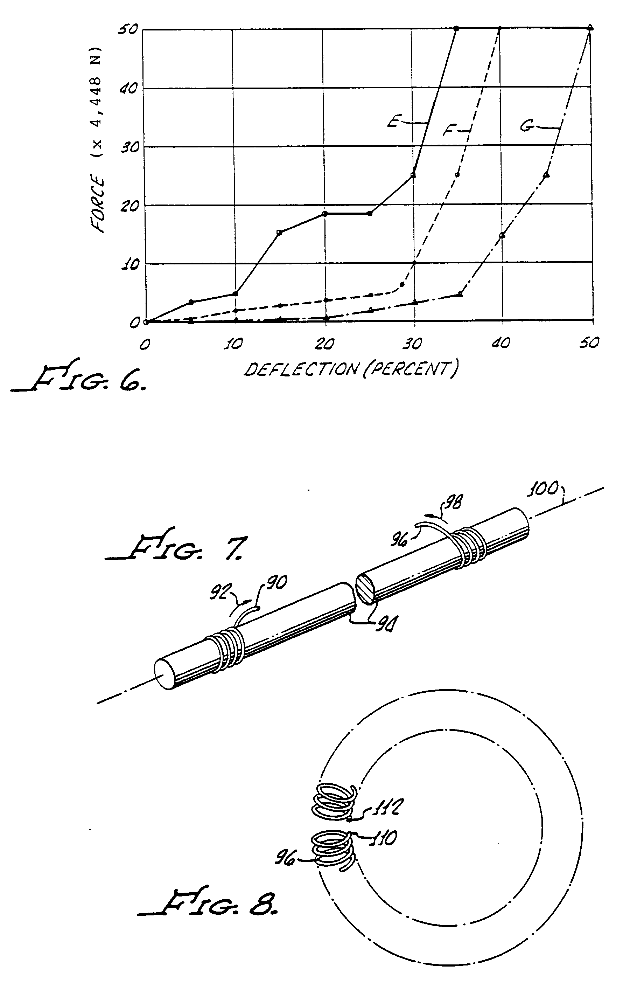

Figure 3 shows a circular welded spring 68, in accordance with the present invention, having the same physical dimensions and wire sizes as spring 30, shown in Figures 2a and 2b, with the spring 68 wound in a counter-clockwise fashion (see arrow 70). In this instance, the spring 68 includes a plurality of coils 72, each having a trailing portion 74 and a leading portion 76 which are defined, respectively, by a back angle 80 and a front angle 82, as shown in Figure 3b.

Similar to spring 30, the coils 72 of spring 68 are interconnected in a manner forming a garter-type axially resilient coiled spring 68 in which the trailing portion falls along an outside diameter 86 and the leading portion falls along an inside diameter 84 of the spring 68.

The springs 30, 68, in accordance with the present invention, have an inside diameter of approximately 21,336 mm (0.84 inches), a coil height (h) of approximately 4,114 mm(0.162 inches), a coil spacing (e) of approximately 1,117 mm (0.044 inches), with wire having a diameter (d) of 0,558 mm (0.022 inches) and a back angle of 14 degrees and a front angle of 25 degrees. These springs 30, 68 display different force-deflection performance than a prior art spring (not shown) having the same dimensions but with the trailing portion of the spring along the inside of the spring. This is demonstrated in Figure 4 which presents a force versus the deflection of the coil in percent of the coil height.

Curve A of Figure 4 represents the performance of the spring 30 or 68, while spring B represents the performance of a prior art spring identical in physical specification, but with the trailing portion along the inside of the spring. Although the two springs have almost identical force-deflection characteristics in their working deflection range, the maximum load points have a variation of about 40 percent.

It has been found that, in accordance with the present invention, the back angle can be varied from as little as one degree of 35 degrees as long as the front angle 54 is greater than the back angle and is larger than 20 degrees and less than 55 degrees. Variation in the back angle of the spring significantly affects the resilient characteristics of the spring independent of the front angle. This is shown in Figure 5 which is a force-deflection curve for springs C and D having spring parameters set forth in Table 1.

Springs C and D are identical springs having the same wire diameter, spring inside diameter coil height and approximately the same front angle, but the back angle and correspondingly the coil spacing is varied. As can be seen in Figure 5, the working deflection of spring D is approximately 50 percent whereas the working deflection of spring C is 45 percent. This is independent of the front angle. Hence, springs can be designed with varying resilient characteristics, such as the force required to deflect the spring, utilizing a spring having the same wire diameter inside a diameter and coil height than was heretofore possible with only varying the front angle of the spring.

As hereinabove described, increased force-deflection characteristics can be used to advantage in conjunction with a sealant, or gasket materials, wherein the spring cavity is predetermined, the latter dictating spring inside diameter (I.D.) and coil height.

TABLE 1

| Spring No. | Wire Dia.(d) (inches) | Spring I.D. (inches) | Coil Height(h) (inches) | Back Angle (degrees) | Front Angle (degrees) | Coil Spring(s) (inches) |
|---|---|---|---|---|---|---|
| C | 0.022 | 0.840 | 0.161 | 10.5° | 38° | 0.043 |
| D | 0.022 | 0.840 | 0.161 | 16.25° | 38° | 0.032 |
| | (m m) | (m m) | (m m) | | | (m m) |
| C | 0,558 | 21,336 | 4,089 | | | 1,092 |
| D | 0,558 | 21,336 | 4,089 | | | 0,812 |

TABLE 2

| Spring No. | Wire Dia.(d) (inches) | Spring I.D. (inches) | Coil Height(h) (inches) | Back Angle (degrees) | Front Angle (degrees) | Coil Spring(s) (inches) |
|---|---|---|---|---|---|---|
| E | 0.016 | 0.850 | 0.163 | 11° | 21° | 0.016 |
| F | 0.016 | 0.850 | 0.163 | 27° | 38° | 0.016 |
| G | 0.016 | 0.850 | 0.163 | 34° | 45° | 0.016 |
| | (m m) | (m m) | (m m) | | | (m m) |
| E | 0,406 | 21,590 | 4,140 | | | 0,406 |
| F | 0,406 | 21,590 | 4,140 | | | 0,406 |
| G | 0,406 | 21,590 | 4,140 | | | 0,406 |

When the coil spacing is held constant, the back angle along with the front angle may be varied to custom design a spring to tailor the resilient characteristics. For example, the smaller the back angle, the higher the force necessary to deflect the spring, as shown in Figure 6, for Springs E, F and G defined in Table 2. This enables springs to be made with smaller wire and close coil spacing. Conversely, as the back angle is increased, the working deflection is increased when the coil spacing is held constant.

As shown in Figure 6, spring E exhibits a substantially greater load in the working deflection area than spring G, which has greater back and front angles.

Turning to Figure 7, there is shown a method for fabricating a garter-type axially resilient coil spring, in accordance with the present invention, by winding a wire 90 in a clockwise fashion, shown by the arrow 92, about a mandrel 94. Alternatively, a wire 96 may be wound in a counterclockwise direction, as shown by the arrow 98, about the mandrel 94 in Figure 7.

It should be appreciated that the wire may be wound clockwise or counterclockwise and, accordingly, the coils may cant clockwise or counterclockwise. In either case, the performance is the same as long as the trailing edge of the formed garter-type spring 30 is disposed along the outside diameter of the spring 30. The wire 90 or 96 is wound around the mandrel 94 with respect to a centerline 100 thereof, so that each coil has a leading portion and a trailing portion as hereinbefore described, with each portion being defined, respectively, by a front angle and a back angle. During winding of the wire, the magnitude of the back angle is adjusted in order to achieve the preselected resiliency of the garter-type axially resilient coil spring 30.

Following the winding of the wire 90 or 96, the ends 110, 112 of the wound wire are attached to form a garter-type axially resilient coiled spring with the trailing portion 40 along outside diameter of the spring 30 and the leading portion 42 along the inside diameter of the spring 30 as illustrated in Figure 8.

**Claims**

1. A garter-type axially resilient coiled spring comprising:
   a plurality of coils (32, 72) canted along a centerline (36) thereof, each coil (32, 72) including a trailing portion (40, 74) and a leading portion (42, 76) with the leading portion (72, 76) advancing along the centerline (36) more than the advancement along the centerline (36) when following the trace of the trailing portion (40, 74); the disposition of the trailing portion (40, 74) of each coil (32, 72) being defined by its back angle (48, 80) with respect to a line (50) normal to the centerline (36) and normal to the plane made up by garter-type spring; the disposition of the leading portion (42, 76) of each coil (32, 72) being defined by its front angle (54, 82) with respect to the line (50) normal to the centerline (36) and normal to the plane made up by the garter-type spring;
   said front angle (54, 82) being greater than said back angle (48, 90); and
   said coils (32, 72) being interconnected in a manner forming a garter-type axially resilient coiled spring, characterised in that
   said back angle (48, 80) is used for determining the force deflection characteristics of the garter-type axially resilient coiled spring,
   and in that the trailing portion (40, 74) is located along an outside diameter of the garter-type axially resilient coiled spring and the leading portion (42, 76) is located along an inside diameter of the garter-type axially resilient coiled spring.

2. The garter-type axially resilient coiled spring according to claim 1, characterised in that the plurality of coils (72) are canted in a counter-clockwise direction in side view of the garter-type spring.

3. The garter-type axially resilient coiled spring according to claims 1 or 2, characterised in that the back angle (48, 80) is greater than 1 degree and less than 40 degrees, and the front angle (54, 82) is greater than 15 degrees and less than 55 degrees.

4. The garter-type axially resilient coiled spring according to claim 1, characterised in that the back angle (48, 80) is less than 25 degrees.

5. The garter-type axially resilient coiled spring according to claims 1 or 4, characterised in that the front angle (54, 82) is less than 35 degrees.

**Patentansprüche**

1. Ringförmig geschlossene, axial elastische Schraubenfeder, enthaltend:
   eine Vielzahl an entlang deren Mittellinie (36) gekippten Windungen (32, 72), wobei jede Windung (32, 72) einen nacheilenden Abschnitt (40, 74) und einen voreilenden Abschnitt (42, 76) aufweist, wobei der voreilende Abschnitt (42, 76) längs der Mittellinie (36) mehr fortschreitet, als das Fortschreiten längs der Mittellinie (36), wenn man dem Lauf des nacheilenden Abschnittes (40, 74) folgt, wobei die Neigung des nacheilenden Abschnittes (40, 74) jeder Windung (32, 72) durch deren Rückwinkel (48, 80) bezüglich einer Linie (50), die senkrecht zur Mittellinie (36) und senkrecht zu der Ebene verläuft, die durch die ringförmig geschlossene Schraubenfeder gebildet wird, bestimmt ist;
   wobei die Neigung des voreilenden Abschnittes (42, 76) jeder Windung (32, 72) durch deren Frontwinkel (54, 82) bezüglich einer Linie (50), die senkrecht zur Mittellinie (36) und senkrecht zu der Ebene verläuft, die durch die ringförmig geschlossene Schraubenfeder gebildet ist, bestimmt ist;
   wobei der Frontwinkel (54, 82) größer als der Rückwinkel (48, 80) ist; und
   wobei die Windungen (32, 72) derart untereinander verbunden sind, daß sie eine ringförmig geschlossene, axial elastische Schraubenfeder bilden, dadurch gekennzeichnet,
   daß der Rückwinkel (48, 80) zum Festlegen der Kraft-Biege-Charakteristik der ringförmig geschlossenen, axial elastischen Schraubenfeder dient,
   und daß der nacheilende Abschnitt (40, 74) längs des äußeren Durchmessers der ringförmig geschlossenen, axial elastischen Schraubenfeder angeordnet ist, und der voreilende Abschnitt (42, 76) längs des inneren Durchmessers der ringförmig geschlossenen, axial elastischen Schraubenfeder angeordnet ist.

2. Ringförmig geschlossene, axial elastische Schraubenfeder nach Anspruch 1, dadurch gekennzeichnet, daß die Vielzahl an Windungen (72), in Seitenansicht der ringförmig geschlossenen Schraubenfeder gesehen, entgegen dem Uhrzeigersinn gekippt sind.

3. Ringförmig geschlossene, axial elastische Schraubenfeder nach Anspruch 1 oder 2, dadurch gekennzeichnet, daß der Rückwinkel (48, 80) größer als 1 Grad und kleiner als 40 Grad ist, und daß der Frontwinkel (54, 82) größer als 15 Grad und kleiner als 55 Grad ist.

4. Ringförmig geschlossene, axial elastische Schraubenfeder nach Anspruch 1, dadurch gekennzeichnet, daß der Rückwinkel (48, 80) kleiner als 25 Grad ist.

5. Ringförmig geschlossene, axial elastische Schraubenfeder nach Anspruch 1 oder 4, dadurch gekennzeichnet, daß der Frontwinkel (54, 82) kleiner als 35 Grad ist.

**Revendications**

1. Ressort hélicoïdal cylindrique en anneau à élasticité axiale comprenant :
   un ensemble de spires (32, 72) inclinées par rapport à leur ligne d'axe (36), chacune des spires (32, 72) comportant une partie postérieure (40, 74) et une partie antérieure (42, 76), l'avance de la partie antérieure (42, 76) dans le sens de la ligne d'axe (36) étant supérieure au pas dans le sens de la ligne d'axe (36) en suivant le parcours de la partie postérieure (40, 74), la disposition de la partie postérieure (40, 74) de chaque spire (32, 72) étant définie par son angle d'inclinaison arrière (48, 80) par rapport à une droite (50) perpendiculaire à la ligne d'axe (36) et normale au plan formé par le ressort cylindrique en anneau, la disposition de la partie antérieure (42, 76) de chaque spire (32, 72) étant définie par son angle d'inclinaison avant (54, 82) par rapport à la droite (50) perpendiculaire à la ligne d'axe (36) et normale au plan formé par le ressort cylindrique en anneau,
   ledit angle avant (54, 82) étant supérieur audit angle arrière (48, 90), et
   lesdites spires (32, 72) étant reliées entre elles de telle sorte qu'elles forment un ressort hélicoïdal cylindrique en anneau à élasticité axiale, caractérisé en ce que ledit angle arrière (48, 80) est utilisé pour déterminer les caractéristiques de déflexion en fonction de l'effort exercé sur le ressort hélicoïdal cylindrique en anneau à élasticité axiale,
   en ce que la partie postérieure (40, 74) est située le long du diamètre extérieur du ressort hélicoïdal cylindrique en anneau à élasticité axiale et en ce que la partie antérieure (42, 76) est située le long du diamètre intérieur du ressort hélicoïdal cylindrique en anneau à élasticité axiale.

2. Ressort hélicoïdal cylindrique en anneau à élasticité axiale selon la revendication 1, caractérisé en ce que l'ensemble des spires (72) est incliné dans le sens inverse horaire si l'on regarde de profil le ressort cylindrique en anneau.

3. Ressort hélicoïdal cylindrique en anneau à élasticité axiale selon la revendication 1 ou 2, caractérisé en ce que l'angle arrière (48, 80) est supérieur à 1 degré et inférieur à 40 degrés, et en ce que l'angle avant (54, 82) est supérieur à 15 degrés et inférieur à 55 degrés.

4. Ressort hélicoïdal cylindrique en anneau à élasticité axiale selon la revendication 1, caractérisé en ce que l'angle arrière (48, 80) est inférieur à 25 degrés.

5. Ressort hélicoïdal cylindrique en anneau à élasticité axiale selon la revendication 1 ou 4, caractérisé en ce que l'angle avant (54, 82) est inférieur à 35 degrés.

EP 0 339 544 B1

FIG. 1.

FIG. 2a.

FIG. 3a.

FIG. 2b.

FIG. 3b.

FIG. 4.   DEFLECTION IN PERCENT OF COIL HEIGHT

WORKING DEFLECTION SPRING "C"
WORKING DEFLECTION SPRING "D"

FIG. 5.   DEFLECTION (PERCENT)

*FIG. 6.*

*FIG. 7.*

*FIG. 8.*

11